# EUROPEAN PATENT SPECIFICATION

(11) **EP 1 724 903 B1**
(45) Date of publication and mention of the grant of the patent: **30.12.2009**
(21) Application number: 06113554.7
(22) Date of filing: 05.05.2006
(51) Int. Cl.: H02J 13/00

(54) **Integrated system for lighting and emergency lighting**
Integriertes System für Beleutung und Notbeleuchtung
Système intégré pour éclairage et éclairage de secours

(30) Priority: 17.05.2005 IT VI20050149
(43) Date of publication of application: 22.11.2006
(73) Proprietor: Beghelli S.p.A., 40050 Monteveglio, Bologna (IT)
(72) Inventor: Beghelli, Gian Pietro, 40050, Monteveglio (Bologna) (IT)
(74) Representative: Iannone, Carlo Luigi

(56) References cited:
- WO-A-2005/041146
- WO-A2-2004/008261
- US-A- 5 661 468

## Description

The present invention refers to an integrated system for lighting and for emergency lighting.

More specifically, the invention concerns an innovative integrated lighting and emergency lighting system, with radio control.

Conventional lighting systems foresee a group of apparatuses equipped with light sources with local controls for switching the flow of light on and off and, possibly for adjusting it.

Solutions are also available that foresee that automation of the lighting on, off and adjustment functions according to the lightness of the surrounding area, the presence of people or events programmed on a system control station.

As far as emergency lighting is concerned, there are centralised control solutions of lighting apparatuses, made solely for the purpose of centralised management of the diagnostics of the apparatuses themselves.

All of the solutions already made, however, foresee systems in which the connections between the lighting apparatuses, the emergency lighting apparatuses, the automation devices and the station are cabled.

Documents WO 2004008261 and US 5661468 disclose an emergency lighting and a lighting system respectively, wherein the lighting units are wirelessly controlled by a management station. Addition of a further lighting unit to the existing system requires unit restructuring.

The purpose of the present invention is, therefore, that of avoiding the aforementioned drawbacks and, in particular, that of making an integrated system for lighting and for emergency lighting, which does not require the use of additional cabling with respect to those necessary for supplying the apparatuses with power.

A further purpose of the invention is that of making an integrated system for lighting and for emergency lighting, which allows installation to be carried out, for example in situations of unit restructuring, without however worsening the cabling costs and making installation possible where, sometimes, it would not be possible.

These and other purposes are accomplished by an integrated system for lighting and emergency lighting, according to the attached claim 1.

Further detailed technical characteristics are shown in the subsequent claims.

Advantageously, according to the invention, an integrated lighting and emergency lighting system is described, in which all of the elements of the system use radio connections for communicating the control and command information.

This system thus has the great advantage of not requiring additional cabling with respect to that which is in any case necessary to supply power to the apparatuses and, therefore, allows installation, for example in situations of restructuring of the installation, without worsening the cabling costs and making installation possible where sometimes it would not be possible.

Important elements of the invention consist, in particular, of:
- an emergency lighting apparatus, which is built in such a way as to always foresee an arrangement inside of it that allows it to be transformed, even at a later time by the customer, from an autonomous apparatus to an apparatus with radio control;
- a radio module, used for the communication between the various elements and built in such a way as to be able to be easily applied to all of the apparatuses of the system, even after the apparatuses have been bought by the customer;
- two different types of "gateway" interface between the radio module and the cabled systems;
- an electronic ballast of the radio type for lamps.

Further characteristics and advantages of the present invention shall become clearer from the following description, relative to a preferred but not limiting example system, and from the attached drawings, in which:
- figure 1 illustrates an overall block diagram of the integrated system for lighting and for emergency lighting, according to the present invention;
- figure 2 schematically illustrates an emergency lighting apparatus, which can be used in the system according to the invention, with integrated radio communication module;

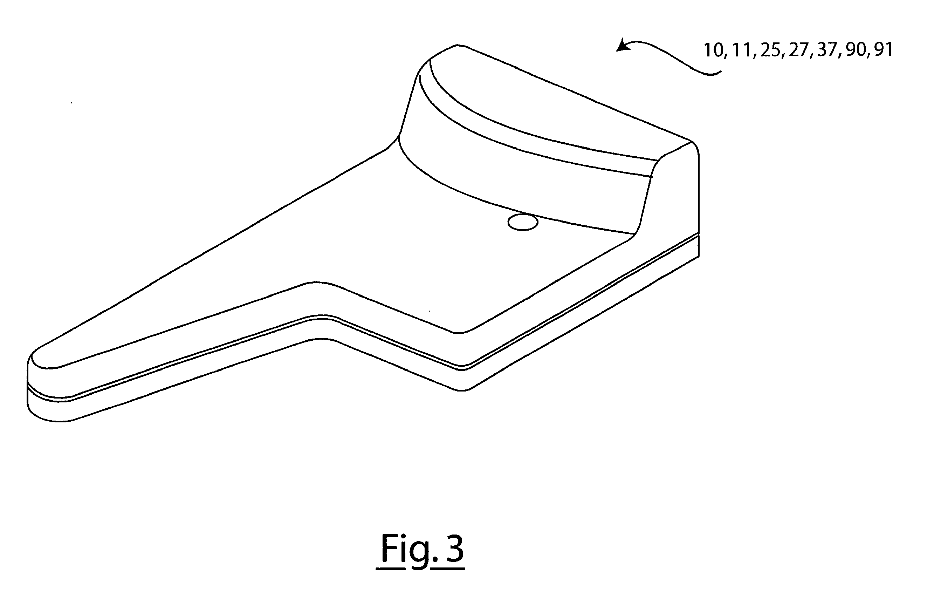

- figure 3 shows a perspective view of the radio communication module according to figure 2;
- figure 4 shows a block diagram of the emergency lighting apparatus of figure 2 and of the radio communication module integrated with it;
- figure 5 shows a block diagram of the radio-bus interface and of the radio communication module connected to it;
- figure 6 shows a block diagram of a radio communication module of the "minibus" type of the integrated system for lighting and for emergency lighting, according to the present invention;
- figure 7 shows a block diagram of a radio ballast device 22 according to figure 1;
- figure 8 shows a perspective view of a preferred example embodiment, but not for limiting purposes, of a radio button reading device, integrated in a box with standard button for wiring accessories for electrical installations;
- figures 9A and 9B respectively show a side view and a front view of the reading device of figure 8.

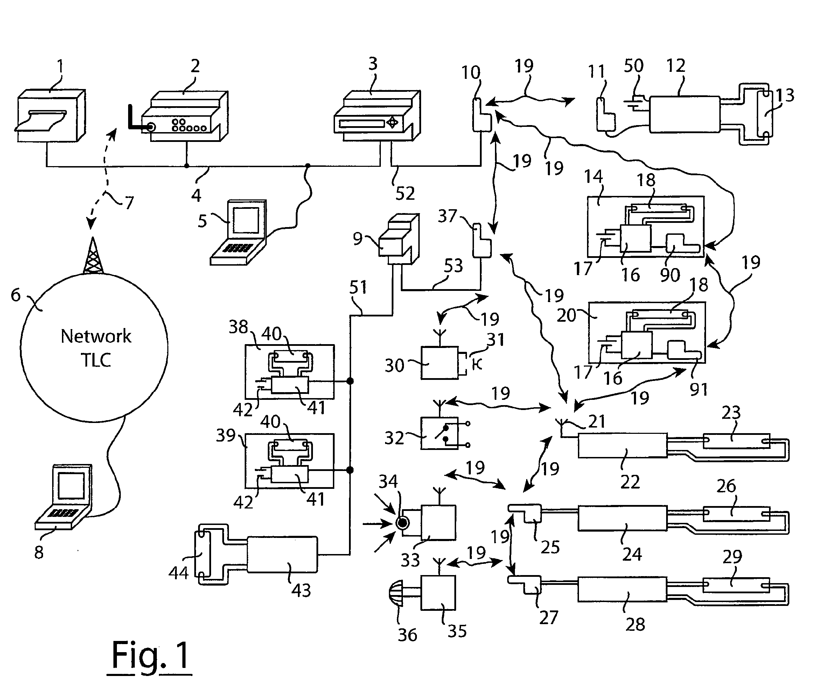

With particular reference to figure 1, the integrated lighting and emergency lighting system is illustrated, with its main components and the possible interactions and connections between them; however, in figure 1 the power supply connections of the devices are left out.

The integrated system according to the invention comprises, to be specific:
- a management station 3, connected to a radio communication module 10, which acts as a transceiver of radio signals 19 and thus communicates with all of the other elements of the system;
- a GSM/GPRS/UMTS modem interface 2, connected to the station 3 through a linear fieldbus 4, for example of the RS485 type;
- a printer 1, connected to the modem interface 2 and to the station 3, through the same linear fieldbus 4, for example of the RS485 type;
- a Personal Computer 5, also connected, through the linear bus 4, to the station 3, which can be used as local console of the system;
- a Personal Computer 8, connected to the station 3, through the telecommunications network 6 (for example a "wireless" GSM, GPRS or UMTS network) that can be used as remote console of the system, and connected to the interface 2, through the wireless connection 7;
- a group of emergency lighting apparatuses 14, 20, with incorporated radio modules 90, 91, connected via radio to the station 3, through the radio ("link") connections 19;
- one or more inverters 12 for lighting up emergency lamps 13, also equipped with a radio communication module 11 for communication with the station 3, and a power supply battery 50;
- one or more dimmerable ballast radios 22, with incorporated radio communication and antenna 21, for controlling lamps 23;
- one or more standard dimmerable ballasts 24, 28 (for example able to be controlled through digital bus according to DALI standard), connected to the lamps 26, 29 and, through the same bus, to radio-minibus (radio-DALI) interface modules 25, 27, connected to the station 3 through the radio links or connections 19;
- a radio-bus interface 9, capable of generating a digital bus 51, for example of the DALI type, to manage, via radio, a group of dimmerable ballasts 43, with bus interface, for example of the DALI type, inserted in lighting apparatuses 44, and a group of emergency lighting apparatuses 38, 39, with operating interface 41 and bus control, for example of the DALI type, and complete with power supply battery 42 and lamp 40;
- a reading device 30 of buttons 31, equipped with radio communication module;
- a relay actuation device 32, equipped with radio communication module;
- a light sensor device 33, with sensor 34 equipped with radio communication module;
- a people sensing device 35, preferably of the passive infrared type, with pyroelectric sensor and lens 36, equipped with radio communication module.

The operation of the integrated system for lighting and for emergency lighting, according to the present invention, is the following.

The station 3 completely governs the system through radio communication, with which all of the devices of the system are equipped (the radio connections are schematised in figure 1 with the arrows and reference numeral 19).

The station 3 communicates locally with the GSM modem interface 2, with the printer 1 and with the possible supervising Personal Computer 5, through the local linear bus 4, for example of the RS485 type.

The station 3 is equipped with a display and with a keypad to give commands and display the status of the system.

The possible functions are:
- diagnostics of the system: check of the operating state of all of the devices and, in particular, checking for possible operating anomalies of the emergency and lighting apparatuses (according to such a function, the station 3 shows a summary of all the operating anomalies of the apparatuses, such as exhausted lamps, defective batteries, power supply failure, power converter failure, etc., and through suitable menus it is possible to access all diagnostic information and clear possible error indications, both operating on the station 3 and operating on the Personal Computers 5, 8);
- switching the flow of light on and off and adjusting it in real time for each individual lighting and emergency lighting apparatus or for selected groups of apparatuses (it is possible, in this case, through a suitable menu, to determine the state of each individual device of the system);
- switching the flow of light on and off and adjusting it for each individual lighting and emergency lighting apparatus, or for selected groups of apparatuses, according to a predetermined and programmed automatic function through the same station 3 or the Personal Computers 5, 8 (from the station 3 or from a Personal Computer 5, 8 it is possible, through suitable menus, to select one or more operating automatisms of the system, like, for example, switching on and off or setting of a certain level of light flow at a certain date and time and/or switching on and off or setting of a certain level of light flow upon the pressing of one of the buttons 31 connected to a device 30 and/or switching on and off or setting of a certain level of light flow when an event is detected by one of the people sensors 35, and/or switching on or off when a certain light level is measured by one of the lighting sensors 33, and/or adjustment of the flow of light according to the light measured by one of the light sensors 33);
- switching groups of emergency apparatuses on, in predetermined time sequences, for particular indications in compliance with safety regulations, for example for indicating emergency exits;
- switching lighting apparatuses or emergency lighting on so that they flash for special indications;
- command for the control of relay actuation devices 32, directly from the station 3 or from a Personal Computer 5, 8, manually or else automatically, according to events linked to the state of the various sensors 30, 33, 35 of the system.

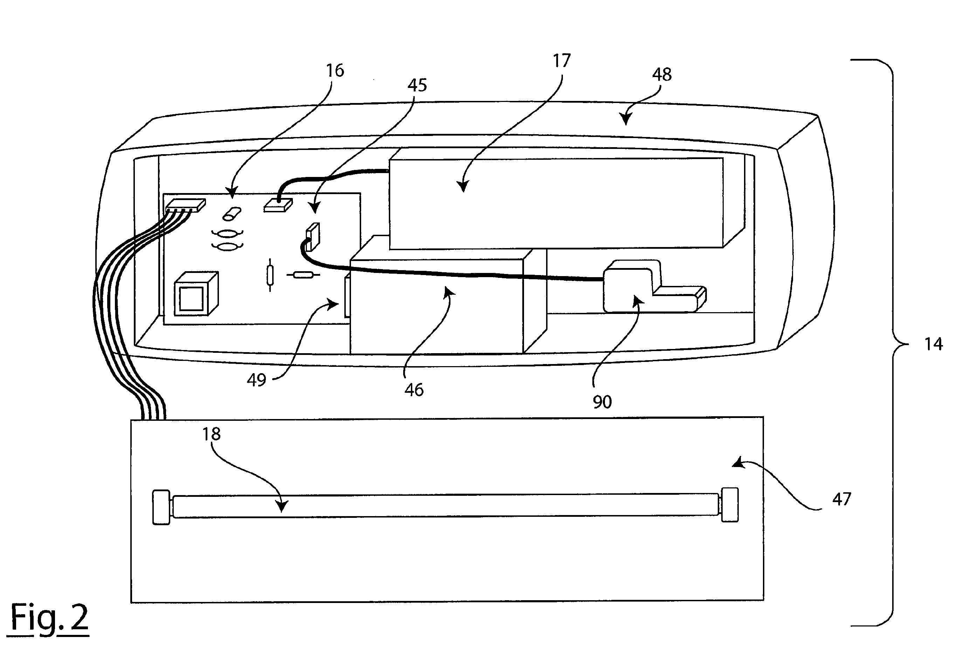

With particular reference to figures 1 and 2, the emergency lighting apparatus 14 consists of a base 48, which houses all of the components, a reflector 47, which houses the fluorescent lamp 18, an electronic circuit 16, which controls the emergency functions, charging of the battery, switching the lamp on and diagnostics, a battery 17, a connection system 49, for supplying power and possibly connecting to a linear fieldbus for the diagnostic functions, a radio communication module 90, connected to the base circuit 16, through the cable 46 and the connector 45.

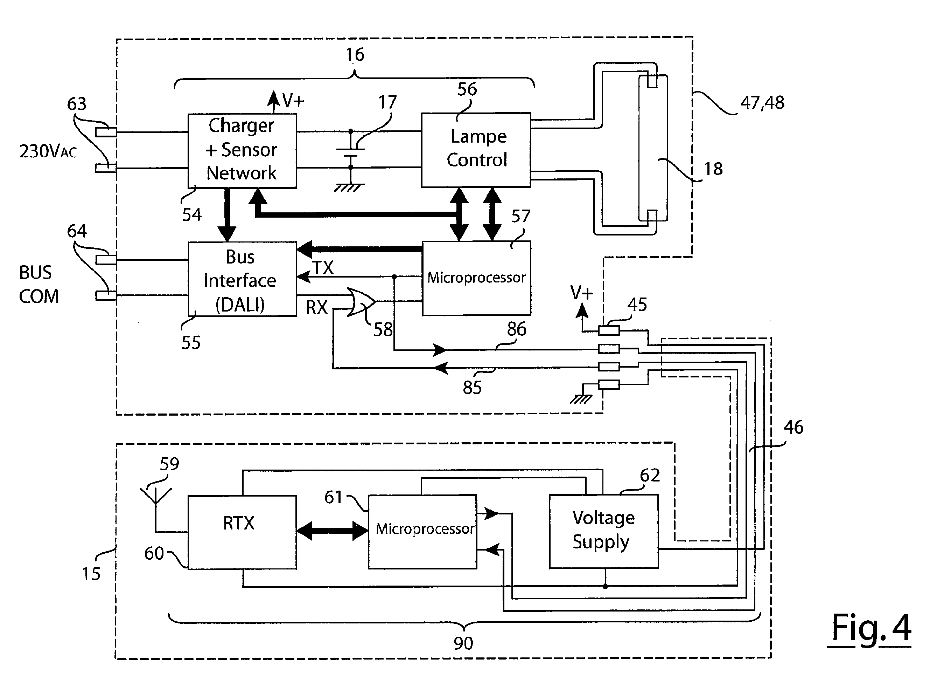

With particular reference to figure 4, the circuit 16 comprises a charger 54, integrating a power supply sensor, which supplies a battery 17, a lamp manager 56, integrating an electronic inverter and suitable circuits for diagnosing the operation of the inverter and of the lamp 18, a linear fieldbus interface circuit 55, for example DALI, a microcontroller 57, a suitable interface logic 58 towards the radio communication module 15 and a connector 45, which enables the emergency apparatus for connection to a radio module 90, represented within the block diagram 15.

The block diagram 15 of the radio module 90 includes a "spread spectrum" transceiver 60 operating in UHF band, a microcontroller 61, which manages the communication protocol and exchanges messages with the circuit 16, through a serial communication bus with 2 wires (RX, TX), and a power supply circuit 62, which generates the supply voltages necessary for the microcontroller 61 and the transceiver 60 to work correctly.

The emergency apparatus 14 represented in figures 1 and 2 can be built without the radio communication module 90 and sold as an emergency apparatus equipped with a communication bus interface (e.g. DALI) 55 with the terminals 64 (figure 4) for connection to a centralized diagnostic system with wires.

At any time the apparatus can this be updated through the insertion of the radio module 90 that, as illustrated in figure 2, must be simply inserted into the apparatus and connected to the circuit 16 through the connector 45 and the conductors 46 (figure 4); in this way the emergency apparatus transforms into a radio-controlled emergency apparatus.

The provisions for the insertion of the radio communication module 90 are carried out at the lowest possible cost, involving the only worsening of cost due to the connector 45 and the port 58 (figure 4); indeed, the serial communication on the wires 85, 86, between the radio module 90 and the microcontroller 57, takes place using the same signals that the microcontroller 57 uses to communicate with the linear bus interface 55 and the terminals 64 (which the apparatus foresees as standard).

This characteristic is important because it offers the advantage to the manufacturer of producing a single type of emergency apparatus 14, suitable for integrating, at the lowest possible cost, a linear interface 55, 64 and a provision for the connection of a radio communication module 90, without the need to differentiate many different products in its own catalogue, with clear advantages in terms of logistics and of economy of scale.

Obviously, from the functional point of view, the apparatus 14 communicates with the rest of the system through the linear bus 55, 64 or else through the radio communication module 90.

The communication protocol with the microcontroller 57 is the same, both in the linear case and in the case of use of the radio module 90; indeed, it is the microcontroller 61 of the radio communication module 90 that takes care of the translation of protocol from linear bus to communication via radio.

The operation of the apparatus 14 is the following.

The microcontroller 57, in rest state, analyses the serial input RX coming from the port 58, decoding possible messages with its own address; at the same time, the microcontroller 57 checks for the presence of the 230 Volt AC power supply 63 through the block 54 and manages the charging of the battery 17, checking the voltage of the battery itself and measuring the charging current.

With a power supply present, the on state of the lamp 18 depends upon the information received in serial mode from the linear bus 55 or from the radio module 90 through the port 58.

In particular, if the instructions foresee operation only in emergency, the microcontroller 57 keeps the lamp 18 switched off until it detects the presence of the power supply on the inputs 63, to then switch on the lamp 18 in the absence of power; if, on the other hand, the microcontroller 57 receives switch on information from the linear bus 55 or from the radio module 90, through the port 58, it commands the circuit 56, making the lamp 18 switch on at the required level of brightness.

Thus, the operating modes of the emergency apparatus are completely configurable from the station 3 and it is possible to make a single apparatus, the way of operating of which is completely determined by the station 3, thanks to communication through the radio module 90.

The microcontroller 57 also manages the diagnostics of the lamp 18 switching it on periodically (for example, for 1 minute once per day or else once per week or else, for the autonomy required of the apparatus, switching the lamp on once every 6 months), checking that it operates correctly.

The diagnostic information is then transmitted to the station 3 (figure 1) via radio, in particular by means of the radio communication module 90.

Such a radio module 90 has the following operation.

The radio transceiver 60 of figure 4 is of the type with "spread spectrum" modulation, in UHF band, with the advantage of the high immunity to interference, thus offering the important advantage of reliability of communication, even in locations with electromagnetic disturbances, which is important for application to the real time control functions of the lighting.

The microcontroller 61 manages the radio communication protocol, which is of the type with repetition and automatic routing of messages, whereas the station 3, for communicating for example with the apparatus 20 (figure 1), uses the apparatus 14 as radio message repeater.

The repetition can be with multiple skips, in the sense that a radio module can use various intermediate radio modules for transferring information and each radio module has the repetition and routing capability; in this way, it is possible to extend the scope of action of the communication via radio, as desired, in the system, making practically any application possible.

In particular, this is made particularly easier by the special radio technology used, in which the band used is ISM, between 2400 and 2483 MHz, where the available bandwidth allows the implementation of a "spread spectrum" communication technique with high transmission bit rate (in the order of 100 kbit/s), which allows very fast packets of data with high information content to be sent.

This has the dual advantage of:
- not overloading the radio means, using it for very short time periods (less than 1 ms for each packet) and
- making the information transfer fast, allowing commands in real time even in the presence of many levels of repetition of the information (indeed, if for example a packet must skip 10 nodes to reach the receiver, with a duration of 1 ms per packet, adding 1 ms for the necessary processing delay, makes 2 ms, which, multiplied by 10 skips, leads to a transfer delay of the packet and therefore a maximum actuation delay of 20 ms, perfectly compatible with actuation in real time of a lighting function).

The microcontroller 61 (figure 4) controls the communication via radio, so as to minimise the power consumption and also minimise the absorption from the power supply 62, also allowing the autonomy to be extended in the absence of the mains power supply in periods in which the power supply source is the battery 17 of the emergency apparatus.

Indeed, the microcontroller 61 is able to manage various operating modes of the transceiver 60, with different power consumption levels of the transceiver itself, like IDLE mode (with a consumption of about ten microwatts), reception mode and transmission mode.

Normally, the transceiver 60, at rest, is in reception state; in this state, the power consumption can be reduced further by equipped the microcontroller 61 with a quartz sufficiently precise to synchronise the operation with the rest of the communication system via radio, so as to know the periodic time intervals, during which the messages shall be received, and thus activate the receiver only during such periods.

The microcontroller 61 thus keeps the transceiver 60 in IDLE state, a condition in which the absorption is reduced to the minimum (ten or so microwatts), whereas the same microcontroller 61 wakes the receiver of the transceiver 60 back up again at the necessary moments, limiting the average power consumption to very low values that are compatible with a long operating autonomy of the battery 17.

Obviously, the transmission function is activated only in the brief periods in which it is necessary, also keeping the average power consumption in this state very low.

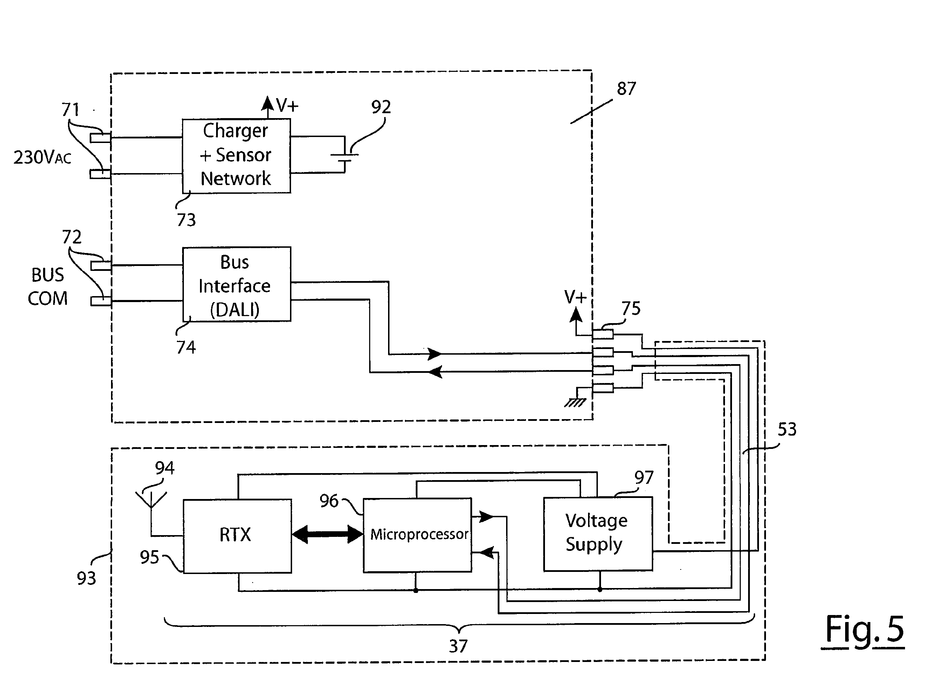

With particular reference to figure 5 that displays the block diagram 87 of the radio-bus interface 9 of figure 1, it should be noted that such an interface 9 simply includes an analogue interface circuit 74 towards the linear bus (for example DALI), connected to the terminals 72, comprising the level adapters and the protection circuits, as well as the circuit elements necessary for supplying the bus with power, a power supply and/or charger 73 of a battery 92, which ensures the operation of the linear bus for at least a few hours in the absence of the mains power supply 71, and a connector 75 for connection, through the conductors 53, to the radio module 37 of figure 1, the block diagram of which is indicated with 93 in figure 5.

The radio module 37, represented in the block diagram 93, consists of the elements 94, 95, 96 and 97, which have, respectively, totally similar operation to that of the elements 59 (antenna), 60 (transceiver), 61 (microcontroller) and 62 (power supply) present in the radio communication module 90 (block diagram 15 of figure 4).

The radio module 37 communicates with the station 3 with similar modes to the radio communication module 90; in particular, the microcontroller 96 of the radio module 37 is able to manage the communication bus accessible by the terminals 72, through the interface 74, according to the protocol of the linear bus (for example DALI) and thus carries out the protocol converter function from linear protocol (for example DALI) to radio protocol and vice-versa.

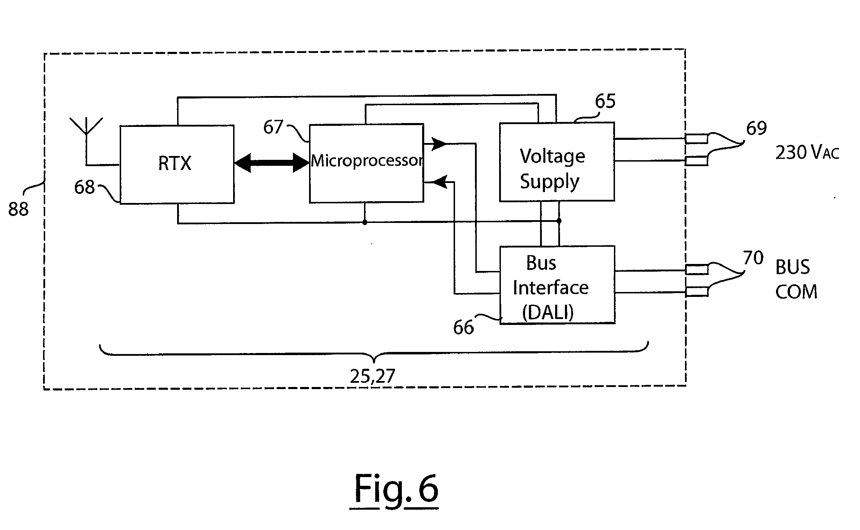

With further reference to figure 6, which displays the block diagram 88 of the radio-minibus interface 25, 27 of figure 1, it should also be specified that such an interface 25, 27 comprises:
- an analogue interface circuit 66 towards the linear bus (for example DALI) connected to the terminals 70, comprising the level adapters and the protection circuits, as well as the circuit elements necessary for supplying the bus with power;
- a power supply 65, which ensures the operation of the system in the presence of 230 Volt AC mains voltage at the terminals 69;
- a transceiver 68, with similar functions to the transceiver 60 of figure 4 of the radio module 90;
- a microcontroller 67, with similar functions to the microcontroller 96 of figure 5 of the radio module 37.

The radio-minibus interface 25, 27 has similar operating characteristics to the radio-bus interface 37, with the difference that it does not have a back-up battery and allows the connection of a limited number of linear apparatuses to its own bus 70.

With these characteristics it offers the advantage of being able to be made in particularly small sizes, thus allowing great ease of installation at the lighting apparatuses or at emergency lighting that it must control.

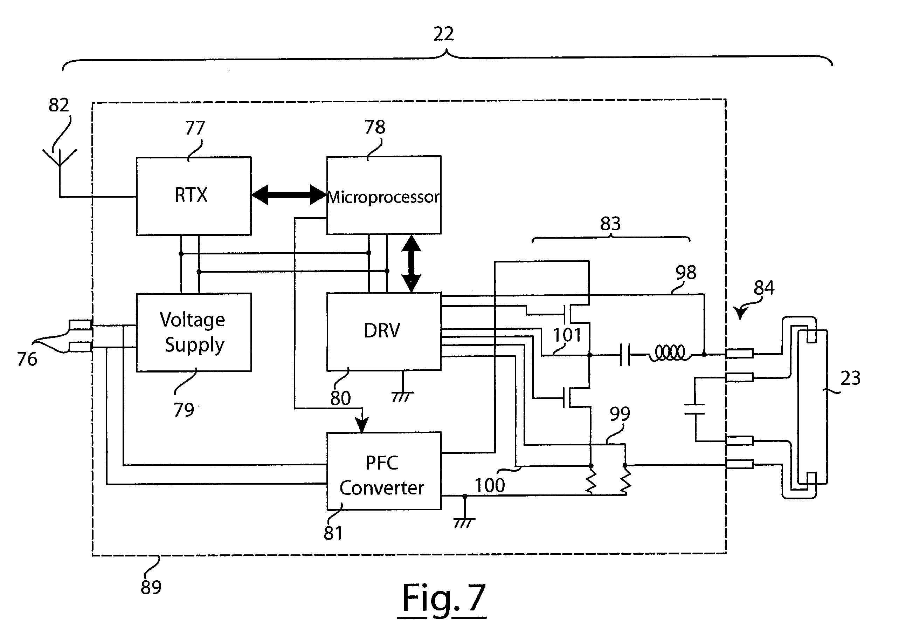

Finally, with particular reference to figure 7, which displays the block diagram 89 of the dimmerable radio ballast 22 of figure 1, such ballast 22 includes:
- a transceiver 77, connected to the antenna 82, with similar functions to the transceiver 60 of the radio communication module 90, integrated in the ballast 22 itself;
- a power supply 79 for supplying the control circuits of the ballast 22 with power;
- a microcontroller 78, which controls the operation of the ballast 22;
- a driver circuit 80 for driving the transistors of the output resonating converter;
- a "PFC converter" 81 for adjusting the power factor of the energy absorbed at the input terminals 76;
- an output resonating converter 83 for driving the lamp 23;
- a terminal board 84 for the connection of the lamp 23.

In practice, the power supply 79 supplies the control circuits 77, 78, 80 with the necessary energy for operation; the power supply 79 is of the type with input working both in alternating current and in direct current, so as to be able to work even in the presence of direct current (as can occur if the ballast 22 is used in an emergency lighting system with centralized battery).

In rest conditions, the microcontroller 78 manages radio communication through the module 77, with similar modes to those used by the radio module 90; in particular, normally, the transceiver 77 is in reception state, in minimum power consumption condition and, periodically, the microcontroller 78 switches the receiver on in the moments of synchronisation to receive the packets of data and, when necessary, the transmitter, in order to send the packets of data.

At the same time, the microcontroller 78 manages the driver 80 and the "PFC converter" 81 to switch the lamp 23 on and adjust its brightness, through the resonating converter 83.

When a radio actuation message is received, the microcontroller 78 controls the driver 80, so as to generate the switch on sequence of the fluorescent lamp 23; then, the driver 80 is driven by the microcontroller 78 to obtain the operating frequency/duty-cycle of the resonating converter 83 so as to obtain the required brightness of the fluorescent tube 23.

The ballast 22 has the necessary diagnostic functions to be able to be inserted in a centralised control system; indeed, the presence of a power supply system 79, separate from the power part comprising the converters 81 and 83, allows the microcontroller 78 to completely manage the diagnostics of the component and to supply the station 3 of the system with complete information on possible failures of the lighting apparatus, to which the ballast 22 belongs.

The driver 80 is built so as to interface towards the microcontroller 78 the diagnosis signals 98, 99, 100, 101, through which the microcontroller 78 is able to completely test the operation of the circuit 83 and of the lamp 23.

When the lamp 23 is switched on, the microcontroller 78 can continuously monitor the voltage signal 98 and the current signal 99 of the power supply of the lamp 23 and thus determine, in addition to the correct operation of the fluorescent lamp 23, also the deterioration of the lamp itself, in order to be able to make an estimation of the remaining useful life of the lamp.

This function is made possible, in particular, by the measurement of the operating voltage, which, in discharge lamps, is a function of the deterioration of the cathodes and, therefore, indirectly, of the ageing of the lamp itself.

The function of measuring the lifetime of the lamp is of particular innovative significance in this component of the system, since, thanks to the integrated radio communication, it is possible to provide this information at the station 3 at a low cost (the information is particularly useful for programming maintenance interventions on the unit).

The signals 100, 101 then allow the correct operation of the power part of the resonating converter 83 to be monitored; the technique used makes use of the microcontroller 78, which, before switching on the lamp 23, is able to manage the switching on of the "PFC converter" 81, so as to provide very short energy impulses to the resonating converter 83, calibrating these short impulses so that they are not destructive in the case of failure of a power element of the converter 83.

The microcontroller 78, through the driver 80 and, in particular, using the signals 100, 101, can thus check that the operation of the converter 83 is correct, before activating the full power output stage.

All of this obtaining a high safety of the product, since destructive conditions with components subject to high energy events are prevented, at least during the switching on step, which is in general the most critical for this type of product, and, at the same time, a greater diagnostic ability of the product itself, even in the case of breaking of one of the power elements, since the breaking, in the switching on step, is not destructive and, therefore, with greater probability that the control part consisting of the blocks 77, 78, 79 is preserved, so as to provide the failure information at the station 3.

A further important consideration is the possibility of making the devices 30, 32, 33 and 35 with universal power supply only of the 230 Volt AC type or else with 230 Volt AC power supply and rechargeable back-up battery or else with non-rechargeable battery power supply, for example with lithium batteries or with alkaline batteries, which last a number of years, thanks to the low power consumption of the radio technology used.

Indeed, the radio transceiver can work by impulses, according to the technology described previously, with an average consumption of a few tens of microwatts and, similarly, the microcontroller that manages the buttons 31 (in the case of the device 30) and/or the relay actuator 32 and/or the brightness sensor 34 (in the case of the device 33) and/or the people sensor 36 (in the case of the device 35) can work by impulses, with an average consumption of a few tens of microwatts.

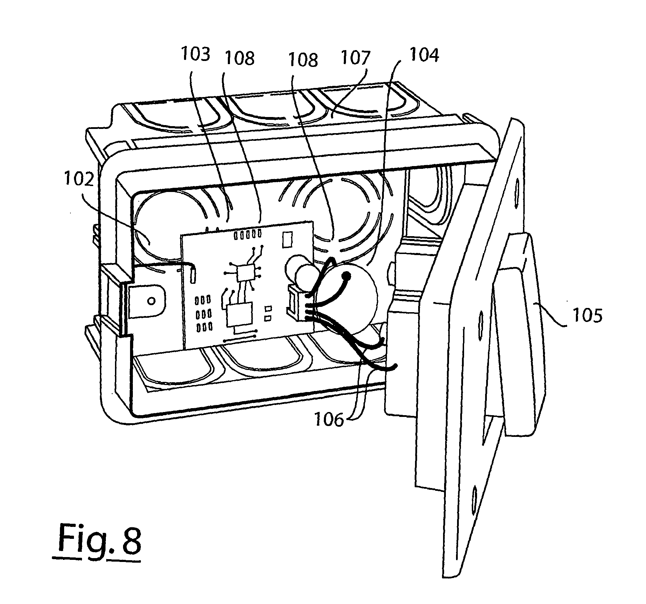

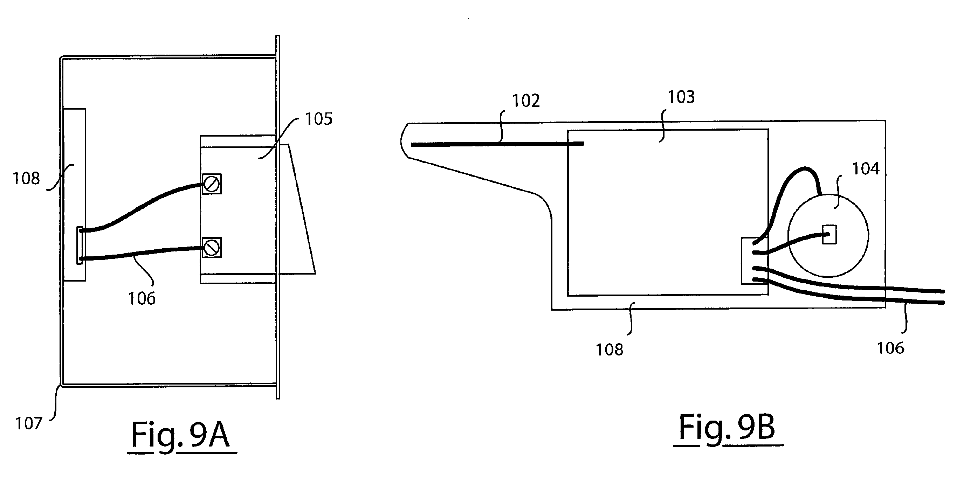

In particular, figures 8, 9A and 9B show a possible embodiment of the button reading device 30.

As indicated in figures 8, 9A and 9B, the reading device 30 consists of the assembly 108 of the reading radio module 103, equipped with integrated antenna 102, and of the lithium power supply battery 104.

The module 108 is connected to the standard button 105, through the cables 106.

In figure 8, for the sake of greater clarity, the circuit 103 and the battery 104 on the inside are shown without the plastic casing that contains them; the casing, as can clearly be seen in the section view shown in figures 9A and 9B, is made with an overall very low thickness, less than 10 mm, so as to be able to easily be housed in a junction box 107 of the wiring accessories suitable for housing the buttons or switches 105.

Indeed, it is known that standard junction boxes have a useful depth of about 40-45 mm, whereas the electrical elements that incorporate the buttons and switches fill such a space for 20-25 mm; the remaining space in depth is available for the cables.

Therefore, by making a module of about 10 mm, as in the case outlined here, full compatibility is obtained with easy and safe installation.

This solution thus offers a great advantage: the customer can use the module 108, thanks to the very low bulk, in any series of switches present on the market, without being forced to use a particular aesthetic solution, as one would have to do if the module 108 also comprised the mechanical actuation button.

The module 108, as conceived, thus allows a truly universal application that frees the customer of aesthetic and functional constraints.

The installer also has a further advantage deriving from the type of solution, since he only has to connect the two cables 106 that, supplied already stripped at the ends, must only be inserted into the terminals of the standard button 105 to then be clamped with the screwdriver.

As already mentioned, in this solution, the lithium battery ensures autonomy of many years of normal use and the module 108 does not need other electrical connections.

It is clear that the module 108 becomes another important element of the described system, allowing the introduction of wireless command members at any point of the building without even minimally altering the pre-existing appearance and without introducing new cables; the module 108 is also particularly advantageous in a system of the type of that illustrated in figure 1, since the radio technology with which the transceiver integrated in it is equipped benefits from multiple repetition technology, being able to exploit all of the devices illustrated in figure 1 as message repetition nodes, and, therefore, being able to eliminate the restrictions to the extension of the system and to the radio range of the individual elements.

This, in particular, is thanks to the transmission speed of the 2.4 GHz "spread spectrum" radio transmission used, which does not appreciably delay the actuations, as mentioned above, even in the presence of multiple message repetitions.

From the description that has been made the characteristics of the integrated system for lighting and for emergency lighting, object of the present invention, are clear, just as the advantages obtained are also clear.

Finally, it is clear that numerous other variants can be brought to the integrated system in question, without for this reason departing from the novelty principles inherent to the inventive idea, just as it is clear that, in the practical embodiment of the invention, the materials, the shapes and the sizes of the illustrated details can be whatever according to requirements and they can be replaced with others that are technically equivalent.

## Claims

1. Integrated system for lighting and for emergency lighting comprising at least one management station (3) of the system, a plurality of emergency lighting apparatuses (14, 20, 38, 39) and a plurality of lighting apparatuses, each of said emergency lighting apparatuses (14, 20, 38, 39) including respectively at least one power supply battery (17, 42, 50), at least one emergency light source (13, 18, 40) and an electronic circuit (12, 16, 41) for the management of the emergency functions, charging the power supply battery (17, 42, 50), switching on the emergency light source (13, 18, 40) and controlling the diagnostic functions, each of said lighting apparatuses (14, 20, 38, 39) also comprising at least one lighting lamp (23, 26, 29, 44) driven through at least one electronic ballast (22, 24, 28, 43), wherein each electronic circuit (12, 16, 41) is connected with a first radio transmitting/receiving module (11, 37, 90, 91) and wherein each electronic ballast (22, 24, 28, 43) is connected with a second radio transmitting/receiving module (21, 25, 27, 37) and wherein said at least one management station (3) of the system is connected with a third radio transmitting/receiving module (10), so as to connect via radio (19) said emergency lighting apparatuses (14, 20, 38, 39) and said lighting apparatuses to said at least one management station (3) of the system, said at least one management station (3) being arranged to communicate with at least one first emergency lighting apparatus (14, 20, 38, 39) or with at least one first lighting apparatus using at least one second emergency lighting apparatus (14, 20, 38, 39) or at least one second lighting apparatus, wherein said at least one management station (3) of the system is connected via radio (19), by means of said third radio transmitting/receiving module (10), to at least one reader device (30) of buttons (31), which comprises at least one modular element (108) connected to a standard button (105) and including at least one reader radio module (103), equipped with an integrated antenna (102) and_connected to a power source (104).

2. Integrated system as claimed in claim 1, **characterised in that** said at least one management station (3) of the system is connected via radio (19), by means of said second and third radio transmitting/receiving modules (10, 21, 25, 27, 37), to at least one radio bus interface (9), which generates at least one digital bus (51) arranged for managing via radio (19) said emergency lighting apparatuses (14, 20, 38, 39) and said lighting apparatuses.

3. Integrated system as claimed in claim 1, **characterised in that** said at least one management station (3) of the system is connected to at least one modem interface (2), by means of at least one linear field bus (4), and to at least one Personal Computer (5, 8), through at least one telecommunication network (6), which can be used as a console of the system.

4. Integrated system as claimed in claim 1, **characterised in that** said first radio transmitting/receiving module (11, 37, 90, 91) includes a power supply circuit (62) and a spread spectrum transceiver (60) operating in UHF band, the operating modes of which are managed by a microcontroller (61, 96), by means of a radio communication protocol of the type with repetition and automatic routing of the messages, said microcontroller (61, 96) being suitable for managing a communication bus carrying out a protocol converter function, from linear protocol to radio protocol and vice-versa.

5. Integrated system as claimed in claim 1, **characterised in that** said at least one electronic ballast (22, 24, 28, 43) includes a transceiver (77), a power supply (79), a microcontroller (78) for controlling the ballast's operation, at least one driver circuit (80, 83) of said at least one lighting lamp (23, 26, 29, 44) for adjusting the brightness, and at least one converter device (81) for adjusting the power factor of the energy absorbed.

6. Integrated system as claimed in claim 1, **characterised in that** said at least one management station (3) of the system is connected via radio (19), by means of said third radio transmitting/receiving module (10), to at least one relay actuation device (32), to at least one brightness sensor device (33) and to at least one people sensor device (35).

7. Integrated system as claimed in claim 1, **characterised in that** each of said emergency lighting apparatuses (14, 20, 38, 39) incorporates a connection system (45, 49) for supply power and at least one interface circuit (55) for the possible connection to a linear filed bus for the diagnostic functions and/or for the connection to said first radio transmitting/receiving module (11, 37, 90, 91).

8. Integrated system as claimed in claim 6, **characterised in that** said at least one reader device (30) of buttons (31), said at least one relay actuation device (32), said at least one brightness sensor device (33) and said at least one people sensor device (35) work by impulses and are supplied with power through a mains power supply or else through a mains power supply and rechargeable back-up batteries or else through power supply from non-rechargeable batteries.

## Patentansprüche

1. Integriertes System zur Beleuchtung und zur Notbeleuchtung, das mindestens eine Verwaltungsstation (3) des Systems, mehrere Notbeleuchtungsvorrichtungen (14, 20, 38, 39) und mehrere Beleuchtungsvorrichtungen umfasst, wobei jede der Notbeleuchtungsvorrichtungen (14, 20, 38, 39) jeweils mindestens eine Leistungsversorgungsbatterie (17, 42, 50), mindestens eine Notlichtquelle (13, 18, 40) und eine elektronische Schaltung (12, 16, 41) für die Verwaltung der Notfunktionen, das Aufladen der Leistungsversorgungsbatterie (17, 42, 50), das Einschalten der Notlichtquelle (13, 18, 40) und das Steuern der Diagnosefunktionen umfasst, wobei jede der Beleuchtungsvorrichtungen (14, 20, 38, 39) auch mindestens eine Beleuchtungslampe (23, 26, 29, 44) umfasst, welche durch mindestens einen elektronischen Ballast (22, 24, 28, 43) betrieben wird, wobei jede elektronische Schaltung (12, 16, 41) mit einem ersten Funkübertragungs-/Empfangsmodul (11, 37, 90, 91) verbunden ist und wobei jeder elektronische Ballast (22, 24, 28, 43) mit einem zweiten Funkübertragungs-/Empfangsmodul (21, 25, 27, 37) verbunden ist und wobei die mindestens eine Verwaltungsstation (3) des Systems mit einem dritten Funkübertragungs-/Empfangsmodul (10) verbunden ist, um die Notbeleuchtungsvorrichtungen (14, 20, 38, 39) und die Beleuchtungsvorrichtungen über Funk (19) mit der mindestens einen Verwaltungsstation (3) des Systems zu verbinden, wobei die mindestens eine Verwaltungsstation (3) so angeordnet ist, dass sie mit mindestens einer ersten Notbeleuchtungsvorrichtung (14, 20, 38, 39) oder mit mindestens einer ersten Beleuchtungsvorrichtung unter Verwendung mindestens einer zweiten Notbeleuchtungsvorrichtung (14, 20, 38, 39) oder mindestens einer zweiten Beleuchtungsvorrichtung kommuniziert, wobei die mindestens eine Verwaltungsstation (3) des Systems über Funk (19) mittels des dritten Funkübertragungs-/Empfangsmoduls (10) mit mindestens einer Leseeinrichtung (30) von Tastern (31) verbunden ist, welche mindestens ein modulares Element (108) umfasst, das mit einem Standardtaster (105) verbunden ist und mindestens ein Leserfunkmodul (103) umfasst, das mit einer integrierten Antenne (102) ausgerüstet ist und mit einer Leistungsquelle (104) verbunden ist.

2. Integriertes System nach Anspruch 1,
**dadurch gekennzeichnet, dass**
die mindestens eine Verwaltungsstation (3) des Systems über Funk (19) mittels des zweiten und dritten Funkübertragungs-/Empfangsmoduls (10, 21, 25, 27, 37) mit mindestens einer Funkbusschnittstelle (9) verbunden ist, welche mindestens einen digitalen Bus (51) erzeugt, der zum Verwalten der Notbeleuchtungsvorrichtungen (14, 20, 38, 39) und der Beleuchtungsvorrichtungen über Funk (19) angeordnet ist.

3. Integriertes System nach Anspruch 1,
**dadurch gekennzeichnet, dass**
die mindestens eine Verwaltungsstation (3) des Systems mittels mindestens eines linearen Feldbusses (4) mit mindestens einer Modemschnittstelle (2), und durch mindestens ein Telekommunikationsnetzwerk (6) mit mindestens einem Personalcomputer (5, 8) verbunden ist, welcher als eine Konsole des Systems verwendet werden kann.

4. Integriertes System nach Anspruch 1,
**dadurch gekennzeichnet, dass**
das erste Funkübertragungs-/Empfangsmodul (11, 37, 90, 91) eine Leistungsversorgungsschaltung (62) und einen Spread Spektrum Transceiver (60) umfasst, der in dem UHF-Band arbeitet, wobei die Betriebsmodi desselben von einem Mikrocontroller (61, 96) mittels eines Funkkommunikationsprotokolls des Typs mit Wiederholung und automatischer Weiterleitung der Botschaften verwaltet werden, wobei der Mikrocontroller (61, 96) zum Verwalten eines Kommunikationsbusses geeignet ist, der eine Protokollwandlerfunktion von einem linearen Protokoll in ein Funkprotokoll und umgekehrt ausführt.

5. Integriertes System nach Anspruch 1,
**dadurch gekennzeichnet, dass**
der mindestens eine elektronische Ballast (22, 24, 28, 43) einen Transceiver (77), eine Leistungsversorgung (79), einen Mikrocontroller (78) zum Steuern des Betriebs des Ballastes, mindestens eine Treiberschaltung (80, 81) der mindestens einen Beleuchtungslampe (23, 26, 29, 44) zum Einstellen der Helligkeit und mindestens eine Umsetzereinrichtung (81) zum Einstellen des Leistungsfaktors der absorbierten Energie umfasst.

6. Integriertes System nach Anspruch 1,
**dadurch gekennzeichnet, dass**
die mindestens eine Verwaltungsstation (3) des Systems über Funk (19) mittels des dritten Funkübertragungs-/Empfangsmoduls (10) mit mindestens einer Relaisstellgliedeinrichtung (32), mit mindestens einer Helligkeitssensoreinrichtung (33) und mit mindestens einer Personensensoreinrichtung (35) verbunden ist.

7. Integriertes System nach Anspruch 1,
**dadurch gekennzeichnet, dass**
jede der Notbeleuchtungsvorrichtungen (14, 20, 38, 39) ein Verbindungssystem (45, 49) zum Liefern von Leistung und mindestens eine Schnittstellenschaltung (55) für die mögliche Verbindung mit einem linearen Feldbus für die Diagnosefunktionen und/oder für die Verbindung mit dem ersten Funkübertragungs-/Empfangsmodul (11, 37, 90, 91) enthält.

8. Integriertes System nach Anspruch 6,
**dadurch gekennzeichnet, dass**
die mindestens eine Leseeinrichtung (30) von Tastern (31), die mindestens eine Relaisstellgliedeinrichtung (32), die mindestens eine Helligkeitssensoreinrichtung (33) und die mindestens eine Personensensoreinrichtung (35) mit Impulsen arbeiten und durch eine Hauptleistungsversorgung oder sonst durch eine Hauptleistungsversorgung und wiederaufladbare Notbatterien oder sonst durch eine Leistungsversorgung von nicht wiederaufladbaren Batterien mit Leistung versorgt werden.

## Revendications

1. Système intégré pour éclairage et pour éclairage d'urgence comprenant au moins une station de gestion (3) du système, une pluralité d'appareils d'éclairage d'urgence (14, 20, 38, 39) et une pluralité d'appareils d'éclairage, chacun desdits appareils d'éclairage d'urgence (14, 20, 38, 39) comprenant respectivement au moins une batterie d'alimentation en énergie électrique (17, 42, 50), au moins une source de lumière d'urgence (13, 18, 40) et un circuit électronique (12, 16, 41) pour la gestion des fonctions d'urgence, charger la batterie d'alimentation en énergie électrique (17, 42, 50), allumer la source de lumière d'urgence (13, 18, 40) et commander les fonctions de diagnostic, chacun desdits appareils d'éclairage (14, 20, 38, 39) comprenant également au moins une lampe d'éclairage (23, 26, 29, 44) excitée par l'intermédiaire d'au moins un ballast électronique (22, 24, 28, 43), dans lequel chaque circuit électronique (12, 16, 41) est connecté à un premier module de transmission/réception radio (11, 37, 90, 91) et dans lequel chaque ballast électronique (22, 24, 28, 43) est connecté à un deuxième module de transmission/réception radio (21, 25, 27, 37) et dans lequel ladite au moins une station de gestion (3) du système est connectée à un troisième module de transmission/réception radio (10), afin de connecter, par radio (19), lesdits appareils d'éclairage d'urgence (14, 20, 38, 39) et lesdits appareils d'éclairage à ladite au moins une station de gestion (3) du système, ladite au moins une station de gestion (3) étant agencée pour communiquer avec au moins un premier appareil d'éclairage d'urgence (14, 20, 38, 39) ou avec au moins un premier appareil d'éclairage en utilisant au moins un second appareil d'éclairage d'urgence (14, 20, 38, 39) ou au moins un second appareil d'éclairage, dans lequel ladite au moins une station de gestion (3) du système est connectée, par radio (19), au moyen dudit troisième module de transmission/réception radio (10), à au moins un dispositif de lecture (30) de boutons (31), qui comprend au moins un élément modulaire (108) connecté à un bouton standard (105) et comprenant au moins un module radio de lecture (103), équipé d'une antenne intégrée (102) et connecté à une source électrique (104).

2. Système intégré selon la revendication 1, **caractérisé en ce que** ladite au moins une station de gestion (3) du système est connectée, par radio (19), au moyen desdits deuxième et troisième modules de transmission/réception radio (10, 21, 25, 27, 37) , à au moins une interface de bus radio (9), qui génère au moins un bus numérique (51) agencé pour gérer, par radio (19), lesdits appareils d'éclairage d'urgence (14, 20, 25 38, 39) et lesdits appareils d'éclairage.

3. Système intégré selon la revendication 1, **caractérisé en ce que** ladite au moins une station de gestion (3) du système est connectée à au moins une interface de modem (2), au moyen d'au moins un bus de champ linéaire (4), et à au moins un ordinateur personnel (5, 8), par l'intermédiaire d'au moins un réseau de télécommunication (6), qui peut être utilisé en tant que console du système.

4. Système intégré selon la revendication 1, **caractérisé en ce que** ledit premier module de transmission/réception radio (11, 37, 90, 91) comprend un circuit d'alimentation en énergie électrique (62) et un émetteur-récepteur à spectre étalé (60) fonctionnant dans la bande UHF, dont les modes de fonctionnement sont gérés par un microcontrôleur (61, 96), au moyen d'un protocole de communication radio du type à répétition et routage automatique des messages, ledit microcontrôleur (61, 96) étant approprié pour gérer un bus de communication réalisant une fonction de conversion de protocole, d'un protocole linéaire à un protocole radio et vice-versa.

5. Système intégré selon la revendication 1, **caractérisé en ce que** ledit au moins un ballast électronique (22, 24, 28, 43) comprend un émetteur-récepteur (77), une alimentation en énergie électrique (79), un microcontrôleur (78) pour commander le fonctionnement du ballast, au moins un circuit d'excitation (80, 83) de ladite au moins une lampe d'éclairage (23, 26, 29, 44) pour régler la luminosité, et au moins un dispositif convertisseur (81) pour régler le facteur de puissance de l'énergie absorbée.

6. Système intégré selon la revendication 1, **caractérisé en ce que** ladite au moins une station de gestion (3) du système est connectée, par radio (19), au moyen dudit troisième module de transmission/réception radio (10), à au moins un dispositif d'actionnement de relais (32), à au moins un dispositif de détection de luminosité (33) et à au moins un dispositif de détection de personne (35).

7. Système intégré selon la revendication 1, **caractérisé en ce que** chacun desdits appareils d'éclairage d'urgence (14, 20, 38, 39) incorpore un système de connexion (45, 49) pour l'alimentation en énergie électrique et au moins un circuit d'interface (55) pour l'éventuelle connexion à un bus de champ linéaire pour les fonctions de diagnostic et/ou pour la connexion audit premier module de transmission/réception radio (11, 37, 90, 91).

8. Système intégré selon la revendication 6, **caractérisé en ce que** ledit au moins un dispositif de lecture (30) de boutons (31), ledit au moins un dispositif d'actionnement de relais (32), ledit au moins dispositif de détection de luminosité (33) et ledit au moins un dispositif de détection de personne (35) fonctionnent par impulsions et sont alimentés en énergie électrique par l'intermédiaire d'une alimentation en énergie électrique de secteur ou autrement par l'intermédiaire d'une alimentation en énergie électrique de secteur et de batteries de secours rechargeables ou autrement par l'intermédiaire d'alimentation en énergie électrique à partir de batteries non rechargeables.
